# EUROPEAN PATENT APPLICATION

(11) **EP 4 169 832 A1**
(43) Date of publication of application: **26.04.2023**
(21) Application number: 21203686.7
(22) Date of filing: 20.10.2021
(51) Int. Cl.: B63H 23/10, B63H 23/16, B63H 23/18, B63H 23/30, B63H 23/08

(54) **A PROPULSION ASSEMBLY**

(71) Applicant: Volvo Penta Corporation, 405 08 Göteborg (SE)
(72) Inventor: ÅSBERG, Mikael, 423 41 Torslanda (SE); IVANSSON, Niclas, 732 98 Arboga (SE)
(74) Representative: Valea AB

(57) **Abstract**

The invention provides a propulsion assembly for a marine vessel, a vehicle, or a working machine, comprising,
- an assembly output shaft (2152) adapted to drive one or more power receiving devices,
- wherein the propulsion assembly further comprises a first output driving shaft (412) which is adapted to drive the assembly output shaft (2152),
- wherein the propulsion assembly comprises a second output driving shaft (422) which is adapted to drive the assembly output shaft (2152),
- wherein the first output driving shaft extends in an angle to the assembly output shaft which is larger than zero degrees and smaller than 180 degrees,
- wherein the propulsion assembly further comprises a first input shaft (4111) adapted to drive the first output driving shaft and adapted to be driven by a first power supply unit (301), wherein the first input shaft (4111) extends in an angle to the first output driving shaft (412) which is larger than zero degrees and smaller than 180 degrees,
- wherein the propulsion assembly further comprises a second input shaft (4112) adapted to drive the first output driving shaft (412) and adapted to be driven by a second power supply unit (302), wherein the second input shaft (4112) extends in an angle to the first output driving shaft (412) which is larger than zero degrees and smaller than 180 degrees,
- wherein the second output driving shaft (422) is adapted to be driven by a third power supply unit (303), wherein the second output driving shaft extends in an angle to the assembly output shaft which is larger than zero degrees and smaller than 180 degrees.

## Description

### TECHNICAL FIELD

The invention relates to a propulsion assembly for a marine vessel, a vehicle, or a working machine.

### BACKGROUND

Propulsion units for marine vessels are known, in which the propulsion unit comprises a driveshaft adapted to be drivingly connected to one or more propellers. It is also known, that such a propulsion unit may be adapted to receive power from a plurality of internal combustion engines. An advantage thereby is that the engine size may be reduced, which allows the use of readily available engines for relatively large power requirements.

GB563115A describes a twin screw marine vessel in which each screw is driven through gearing by a group of four engines, each group comprising two aligned direct-coupled pairs of engines side by side with a driving pinion between each coupled pair, a gear wheel in driving relationship with a propeller shaft being between the two associated pairs of engines so that it is driven on opposite sides by the two pinions.

The multiple engine propeller drive allows scaling up power capacities while allowing the use of readily available engines, each with a relatively low power capacity. There is however a desire to increase the installation flexibility of propulsion assemblies in marine vessels, land vehicles, and working machines, e.g. in view of limited installation spaces, and/or the use of different propeller drivetrain types.

### SUMMARY

An object of the invention is to allow an increased flexibility when designing propulsion assemblies for marine vessels, vehicles, and working machines.

The object is reached with a set of parts for marine vessel propulsion assemblies according to claim 1. Thus, the object is reached with a propulsion assembly for a marine vessel, a vehicle, or a working machine, comprising,
- an assembly output shaft adapted to drive one or more power receiving devices,
- wherein the propulsion assembly further comprises a first output driving shaft which is adapted to drive the assembly output shaft,
- wherein the propulsion assembly comprises a second output driving shaft which is adapted to drive the assembly output shaft,
- wherein the first output driving shaft extends in an angle to the assembly output shaft which is larger than zero degrees and smaller than 180 degrees,
- wherein the propulsion assembly further comprises a first input shaft adapted to drive the first output driving shaft and adapted to be driven by a first power supply unit, wherein the first input shaft extends in an angle to the first output driving shaft which is larger than zero degrees and smaller than 180 degrees,
- wherein the propulsion assembly further comprises a second input shaft adapted to drive the first output driving shaft and adapted to be driven by a second power supply unit, wherein the second input shaft extends in an angle to the first output driving shaft which is larger than zero degrees and smaller than 180 degrees,
- wherein the second output driving shaft is adapted to be driven by a third power supply unit, wherein the second output driving shaft extends in an angle to the assembly output shaft which is larger than zero degrees and smaller than 180 degrees.

Thus, the invention is applicable to marine vessels, vehicles, or working machines. The vehicles may be e.g. buses, road trucks, or cars. The working machines may be e.g. mine trucks, wheel loaders, or articulated haulers.

The first and second output driving shafts extending in respective angles to the assembly output shaft which are larger than zero degrees and smaller than 180 degrees, means that the first and second output driving shafts are non-parallel to the assembly output shaft. Thereby, an infinite number of angular locations of the first and second output driving shafts, in relation to the assembly output shaft, are allowed. This may be provided by respective bevelled gears between the assembly output shaft and a respective of the first and second output driving shafts. In some embodiments, the first and second output driving shafts may extend in respective angles to the assembly output shaft which are larger than 45 degrees and smaller than 135 degrees.

Similarly, the first and second input shafts extending in respective angles to the first output driving shaft which are larger than zero degrees and smaller than 180 degrees, means that the first and second input shafts are non-parallel to the first output driving shaft. Thereby, an infinite number of angular locations of the first and second input shafts, in relation to the first output driving shaft, are allowed. This may be provided by respective bevelled gears between the first output driving shaft and a respective of the first and second input shafts. In some embodiments, the first and second input shafts may extend in respective angles to the first output driving shaft which are larger than 45 degrees and smaller than 135 degrees.

Thereby, the allowance, by the multiple power supply unit drive for the assembly output shaft, for scaling up power capacities of propulsion assemblies, while allowing the use of readily available power supply units, is retained, while possible installation configurations of the power supply units, and the shafts, are increased. Thereby, the installation flexibility is increased. For example, for marine vessels, the propulsion assembly may be easily adapted to different types of propulsion drive types, such as inboard shaft drives, pod drives with inboard engines or motors, stern drives with inboard engines or motors, or outboard engines.

Preferably, the first input shaft extends orthogonally to the first output driving shaft, and/or the second input shaft extends orthogonally to the first output driving shaft. Thereby, the first and second power supply units may be oriented perpendicularly to the first output driving shaft. This is beneficial where the installation space in the direction of the first output driving shaft is limited.

Preferably, a first bevelled gear wheel is coaxial with the first output driving shaft and is arranged to drive the first output driving shaft, wherein the first input shaft and the second input shaft are both arranged to drive the first output driving shaft via the first bevelled gear wheel. Thereby, the first input shaft and the second input shaft may both be adapted to drive the first output driving shaft via a first bevelled gear set.

Preferably, the first input shaft and the second input shaft are located on opposite sides of the first output driving shaft. Thereby, the space around the first output driving shaft may be used in an optimal manner.

Preferably, the first output driving shaft extends orthogonally to the assembly output shaft. Thereby, the distance of the first and second power supply units, from the assembly output shaft, may be selected by selecting the length of the first output driving shaft. Thereby, a high degree of flexibility is provided regarding the distance between the assembly output shaft and the first and second power supply units.

Preferably, the second output driving shaft extends orthogonally to the assembly output shaft. This is beneficial where the installation space in the direction of the assembly output shaft is limited.

Preferably, an output bevelled gear wheel is coaxial with the assembly output shaft and is arranged to drive the assembly output shaft, wherein the first output driving shaft and the second output driving shaft are both arranged to drive the assembly output shaft via the output bevelled gear wheel. Thereby, the first and second output driving shafts may both be adapted to drive the assembly output shaft via an output bevelled gear set.

Preferably, the first output driving shaft and the second output driving shaft are located on opposite sides of the assembly output shaft. Thereby, the space around the assembly output shaft may be used in an optimal manner.

Preferably, the propulsion assembly further comprises a third input shaft adapted to drive the second output driving shaft, and adapted to be driven by the third power supply unit, wherein the third input shaft extends in an angle to the second output driving shaft which is larger than zero degrees and smaller than 180 degrees.

Preferably, the propulsion assembly further comprises a fourth input shaft adapted to drive the second output driving shaft, and adapted to be driven by a fourth power supply unit, wherein the fourth input shaft extends in an angle to the second output driving shaft which is larger than zero degrees and smaller than 180 degrees.

The third and fourth input shafts extending in respective angles to the second output driving shaft which are larger than zero degrees and smaller than 180 degrees, means that the third and fourth input shafts are non-parallel to the second output driving shaft. Thereby, an infinite number of angular locations of the third and fourth input shafts, in relation to the second output driving shaft, are allowed. This may be provided by respective bevelled gears between the second output driving shaft and a respective of the third and fourth input shafts. In some embodiments, the third and fourth input shafts may extend in respective angles to the second output driving shaft which are larger than 45 degrees and smaller than 135 degrees.

Preferably, the third input shaft extends orthogonally to the second output driving shaft. Preferably, the fourth input shaft extends orthogonally to the second output driving shaft. Thereby, the third and fourth power supply units may be oriented perpendicularly to the second output driving shaft. This is beneficial where the installation space in the direction of the second output driving shaft is limited.

Preferably, a second bevelled gear wheel is coaxial with the second output driving shaft and is arranged to drive the second output driving shaft, wherein the third input shaft and the fourth input shaft are both arranged to drive the second output driving shaft via the second bevelled gear wheel. Thereby, the third input shaft and the fourth input shaft may both be adapted to drive the second output driving shaft via a second bevelled gear set.

Preferably, the third input shaft and the fourth input shaft are located on opposite sides of the second output driving shaft. Thereby, the space around the second output driving shaft may be used in an optimal manner.

The object is also reached with a propulsion assembly for a marine vessel, a vehicle, or a working machine, comprising,
- an assembly output shaft adapted to drive one or more power receiving devices,
- wherein the propulsion assembly further comprises a first output driving shaft which is adapted to drive the assembly output shaft, wherein the first output driving shaft extends in an angle to the assembly output shaft which is larger than zero degrees and smaller than 180 degrees,
- wherein the propulsion assembly further comprises a first input shaft adapted to drive the first output driving shaft and adapted to be driven by a primary power supply unit, wherein the first input shaft extends in an angle to the first output driving shaft which is larger than zero degrees and smaller than 180 degrees,
- wherein the propulsion assembly comprises a second output driving shaft which is adapted to drive the assembly output shaft, wherein the second output driving shaft is adapted to be driven by a secondary power supply unit, wherein the second output driving shaft extends in an angle to the assembly output shaft which is larger than zero degrees and smaller than 180 degrees,
- wherein an output bevelled gear wheel is coaxial with the assembly output shaft and is arranged to drive the assembly output shaft, wherein the first output driving shaft and the second output driving shaft are both arranged to drive the assembly output shaft via the output bevelled gear wheel.

As suggested above, the first and second output driving shafts extending in respective angles to the assembly output shaft which are larger than zero degrees and smaller than 180 degrees, means that the first and second output driving shafts are non-parallel to the assembly output shaft. Thereby, an infinite number of angular locations of the first and second output driving shafts, in relation to the assembly output shaft, are allowed.

Similarly, the first input shaft extending in an angle to the first output driving shaft which is larger than zero degrees and smaller than 180 degrees, means that the first input shaft is non-parallel to the first output driving shaft. Thereby, an infinite number of angular locations of the first input shaft, in relation to the first output driving shaft, are allowed.

Further, the first output driving shaft and the second output driving shaft both being arranged to drive the assembly output shaft via the output bevelled gear wheel, is beneficial where the installation space in the direction of the assembly output shaft is limited.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples. In the drawings:
- Fig. 1 is a side view of a vehicle in the form of a mining truck.
- Fig. 2 is a schematic top view of a drivetrain in the vehicle in fig. 1.
- Fig. 2a is a schematic view of a drivetrain including an alternative embodiment of the invention.
- Fig. 3 is a schematic view of a drivetrain including another embodiment of the invention.
- Fig. 4 is a schematic view of a drivetrain including a further embodiment of the invention.
- Fig. 5 is a schematic view of a drivetrain including yet another embodiment of the invention.
- Fig. 6 is a perspective view from below of a marine vessel comprising a propulsion system comprising a propulsion assembly according to an embodiment of the invention.
- Fig. 7 is a side view of a propulsion assembly of the marine vessel in fig. 6.
- Fig. 8 is a cross-sectional view of a propulsion assembly of the marine vessel in fig. 6, the section coinciding with propeller axes and driveshafts of the propulsion assembly.
- Fig. 9 is a cross-sectional view of the propulsion assembly in fig. 7, with the section oriented as indicated with the arrows IX-IX in fig. 7.
- Fig. 10 is a cross-sectional view of the propulsion assembly in fig. 7, with the section oriented as indicated with the arrows X-X in fig. 7.
- Fig. 11 is a cross-sectional view similar to the one in fig. 10, of a propulsion assembly which is altered in relation to the one in fig. 10.
- Fig. 12a - fig. 12b depict examples of configurations of propulsion systems allowed with embodiments of the invention.
- Fig. 13 is a cross-sectional view similar to the view of fig. 10, of a propulsion assembly according to a further embodiment of the invention.
- Fig. 14 is a side view of a propulsion assembly of a marine vessel according to a further embodiment of the invention.

### DETAILED DESCRIPTION OF EXAMPLE EMBODIMENTS OF THE INVENTION

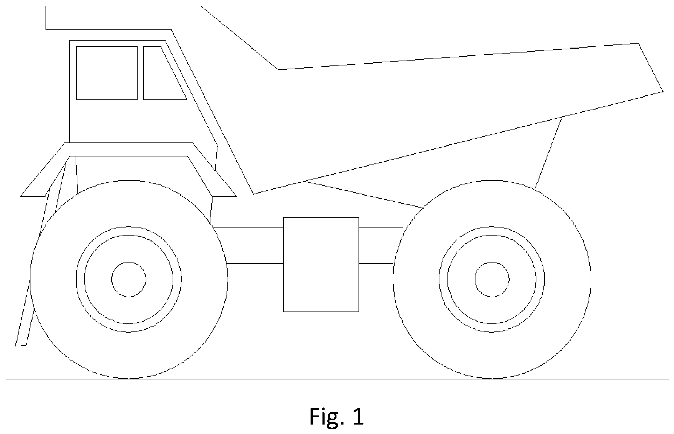

Fig. 1 shows a vehicle in the form of a mining truck.

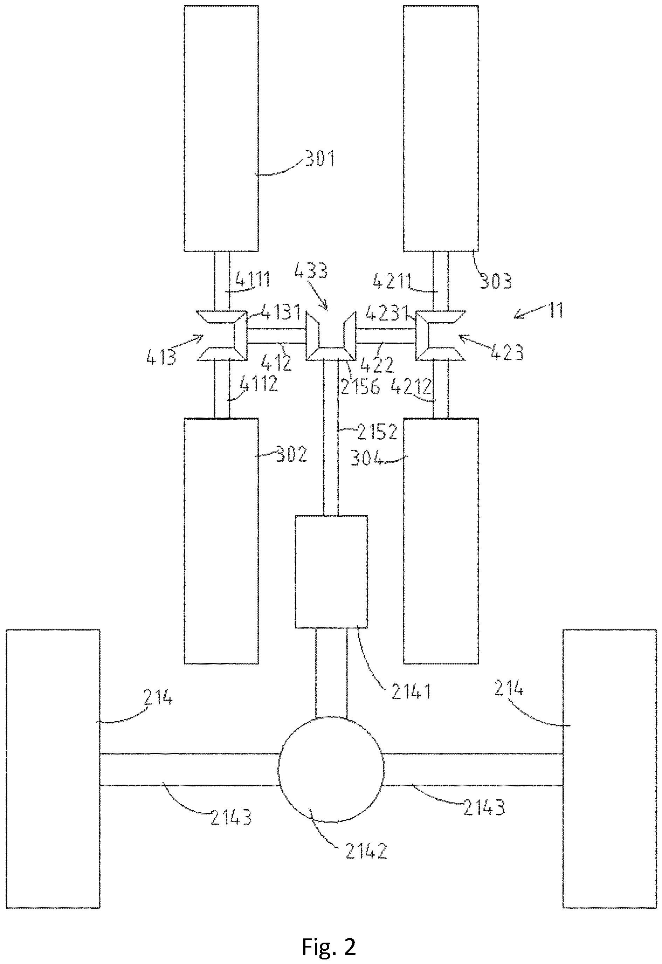

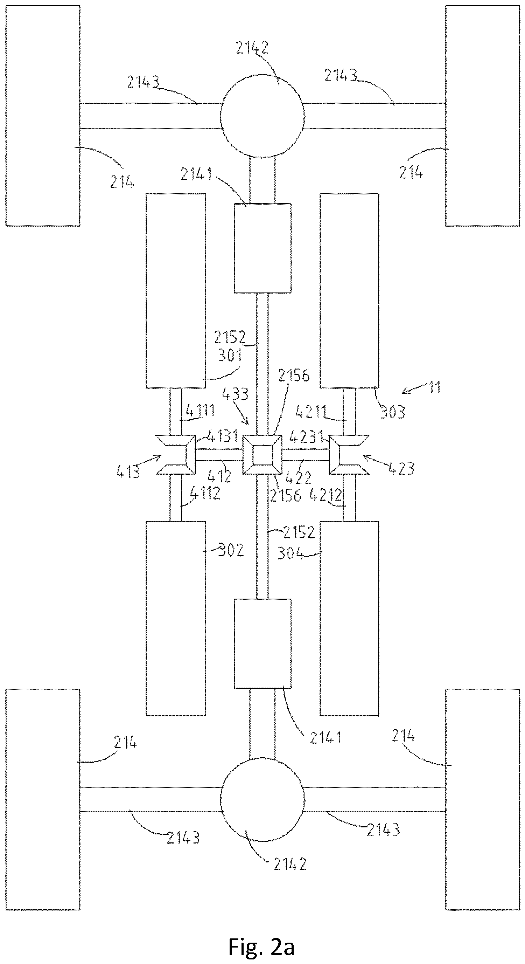

Reference is made also to fig. 2. The vehicle comprises a drivetrain with four power supply units, in this example in the form of internal combustion engines 301-304, and a propulsion assembly 11. The propulsion assembly 11 is arranged to transfer torque from the power supply units 303-304 to two power receiving devices 214. The power receiving devices are driven wheels 214 of the vehicle.

The propulsion assembly 11 comprises an assembly output shaft 2152 adapted to drive the wheels 214. The assembly output shaft 2152 is adapted to drive the wheels 214 via a gearbox 2141, a differential gear 2142, and respective wheel shafts 2143.

The power supply units 303-304 are arranged to drive the assembly output shaft 2152 via shafts 4111, 4112, 412, 4211, 4212, 422 described below. In this example, the shafts, via which the power supply units 303-304 is arranged to drive the assembly output shaft 2152, substantially extend in a horizontal plane, when the vehicle is on a horizontal surface. In other embodiments, one or more of the shafts, via which the power supply units 303-304 is arranged to drive the assembly output shaft 2152, extend in a non-zero angle to the horizontal plane.

The propulsion assembly 11 comprises a first output driving shaft 412 which is adapted to drive the assembly output shaft 2152. The first output driving shaft 412 is adapted to drive the assembly output shaft 2152 via an output bevelled gear 433 comprising an output bevelled gear wheel 2156. The output bevelled gear wheel 2156 is fixed to the assembly output shaft 2152. The first output driving shaft 412 extends orthogonally to the assembly output shaft 2152.

The propulsion assembly further comprises a first input shaft 4111 adapted to drive the first output driving shaft 412 via a first input bevelled gear 413 comprising a first bevelled gear wheel 4131. The first bevelled gear wheel 4131 is fixed to the first output driving shaft 412. Thereby, the first bevelled gear wheel 4131 is coaxial with the first output driving shaft 412 and arranged to drive the first output driving shaft 412.

The first input shaft 4111 is adapted to be driven by a first of the power supply units 301. Thereby the first output driving shaft 412 is adapted to be driven by the first power supply unit 301. The first input shaft 4111 extends orthogonally to the first output driving shaft 412.

The propulsion assembly further comprises a second input shaft 4112 adapted to drive the first output driving shaft 412 via the first input bevelled gear 413. The second input shaft 4112 is adapted to be driven by a second of the power supply units 302. Thereby the first output driving shaft 412 is adapted to be driven by the second power supply unit 302. The second input shaft 4112 extends orthogonally to the first output driving shaft 412.

The first input shaft 4111 and the second input shaft 4112 are located on opposite sides of the first output driving shaft 412. Thereby, the first input shaft 4111 and the second input shaft 4112 extend in opposite directions.

The propulsion assembly 11 comprises a second output driving shaft 422 which is adapted to drive the assembly output shaft 2152. The second output driving shaft 422 is adapted to drive the assembly output shaft 2152 via the output bevelled gear 433. The second output driving shaft 422 extends orthogonally to the assembly output shaft 2152.

The first and second output driving shafts 412, 422 are located on opposite sides of the assembly output shaft 2152. Thereby, the first and second output driving shafts 412, 422 extend in opposite directions.

The propulsion assembly further comprises a third input shaft 4211 adapted to drive the second output driving shaft 422 via a second input bevelled gear 423 comprising a second bevelled gear wheel 4231. The second bevelled gear wheel 4231 is fixed to the second output driving shaft 422. Thereby, the second bevelled gear wheel 4231 is coaxial with the second output driving shaft 422 and arranged to drive the second output driving shaft 422.

The third input shaft 4211 is adapted to be driven by a third of the power supply units 303. Thereby the second output driving shaft 422 is adapted to be driven by the third power supply unit 303. The third input shaft 4211 extends orthogonally to the second output driving shaft 422.

The propulsion assembly further comprises a fourth input shaft 4212 adapted to drive the second output driving shaft 422 via the second input bevelled gear 423. The fourth input shaft 4212 is adapted to be driven by a fourth of the power supply units 304. Thereby the second output driving shaft 422 is adapted to be driven by the fourth power supply unit 304. The fourth input shaft 4212 extends orthogonally to the second output driving shaft 422.

The third input shaft 4211 and the fourth input shaft 4212 are located on opposite sides of the second output driving shaft 422. Thereby, the third input shaft 4211 and the fourth input shaft 4212 extend in opposite directions.

Embodiments of the invention may comprise two or more assembly output shafts. Thereby, each assembly output shaft may be related to the other shafts of the respective propulsion assembly as defined in any of the claims provided herein. Thereby, each assembly output shaft may be arranged to drive one or more respective power receiving devices

Reference is made to fig. 2a, showing an embodiment similar to the one in fig. 2, but with the following differences:
Fig. 2a depicts a propulsion assembly of a vehicle with a four wheel drive arrangement. The propulsion assembly comprises two assembly output shafts 2152. Each assembly output shaft 2152 is adapted to drive a respective of a pair of wheels 214. Each assembly output shaft 2152 is adapted to drive the respective pair of wheels 214 via a respective gearbox 2141, a respective differential gear 2142, and a respective pair of wheel shafts 2143.

The first and second output driving shafts 412, 422 are adapted to drive the assembly output shafts 2152 via the output bevelled gear 433. In this example, the output bevelled gear 433 comprises two output bevelled gear wheels 2156, one for each assembly output shaft 2152.

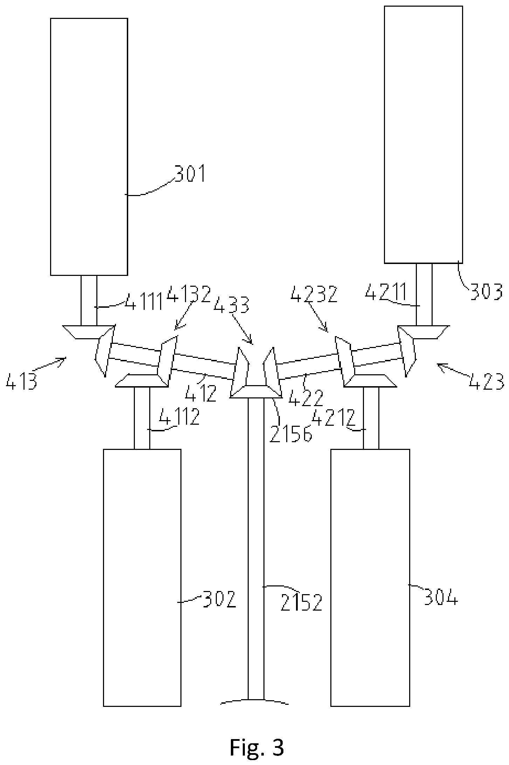

Reference is made to fig. 3, depicting a part of a drivetrain including an alternative embodiment of the invention. The drivetrain is similar to the one described with reference to fig. 2, except for the following:

The first output driving shaft 412 extends in an angle of about 10 degrees to the assembly output shaft 2152. The first input shaft 4111 is adapted to drive the first output driving shaft 412 via a first input bevelled gear 413. The first input shaft 4111 extends in an angle of about 10 degrees to the first output driving shaft 412. Thereby, the first input shaft 4111 is parallel to the assembly output shaft 2152.

The second output driving shaft 422 extends in an angle of about 10 degrees to the assembly output shaft 2152. The third input shaft 4211 is adapted to drive the second output driving shaft 422 via a second input bevelled gear 423. The third input shaft 4211 extends in an angle of about 10 degrees to the second output driving shaft 422. Thereby, the third input shaft 4211 is parallel to the assembly output shaft 2152.

The second input shaft 4112 is adapted to drive the first output driving shaft 412 via a third input bevelled gear 4132. The third input bevelled gear 4132 is located between the first input bevelled gear 413 and the output bevelled gear 433. The second input shaft 4112 extends in an angle of about 10 degrees to the first output driving shaft 412. Thereby, the second input shaft 4112 is parallel to the assembly output shaft 2152.

The fourth input shaft 4212 is adapted to drive the second output driving shaft 422 via a fourth input bevelled gear 4232. The fourth input bevelled gear 4232 is located between the second input bevelled gear 423 and the output bevelled gear 433. The fourth input shaft 4212 extends in an angle of about 10 degrees to the second output driving shaft 422. Thereby, the fourth input shaft 4212 is parallel to the assembly output shaft 2152.

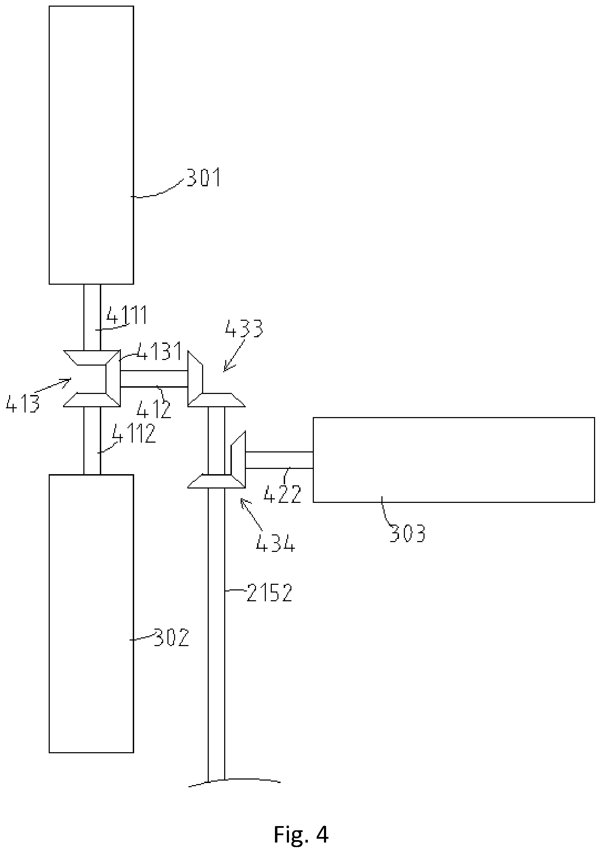

Reference is made to fig. 4, depicting a part of a drivetrain including a further embodiment of the invention. The drivetrain is similar to the one described with reference to fig. 2, except for the following:
The drivetrain comprises three power supply units, in this example in the form of internal combustion engines 301-303. The second output driving shaft 422 is adapted to be driven directly by the third power supply unit 303. The first output driving shaft 412 is adapted to drive the assembly output shaft 2152 via a first output bevelled gear 433. The second output driving shaft 422 is adapted to drive the assembly output shaft 2152 via a second output bevelled gear 434. The second output bevelled gear 434 is located along the assembly output shaft 2152 between the first output bevelled gear 433 and the power receiving devices (not shown).

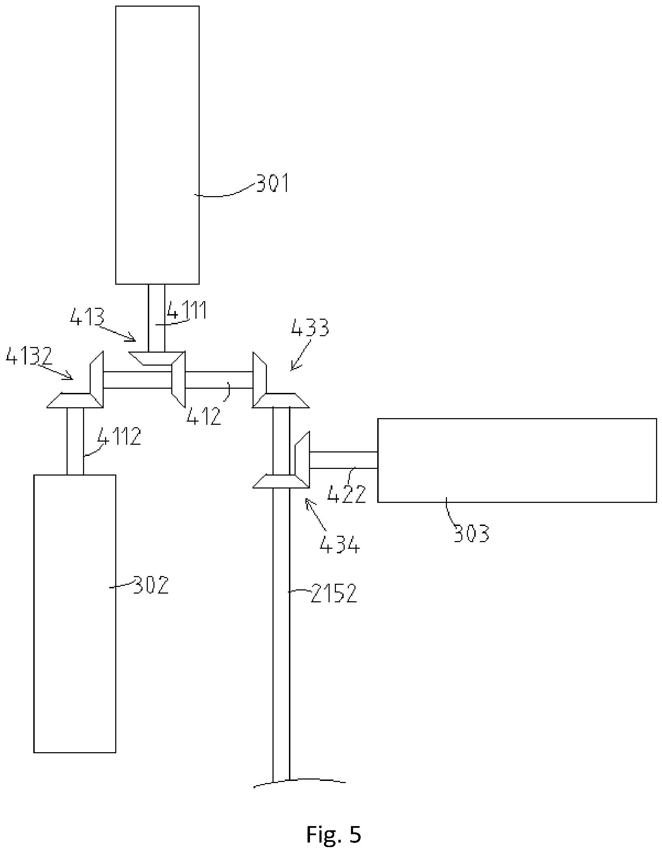

Reference is made to fig. 5, depicting a part of a drivetrain including another embodiment of the invention. The drivetrain is similar to the one described with reference to fig. 2, except for the following:
The first input shaft 4111 is adapted to drive the first output driving shaft 412 via a first input bevelled gear 413. The second input shaft 4112 is adapted to drive the first output driving shaft 412 via a further input bevelled gear 4132. The first input bevelled gear 413 is located between the further input bevelled gear 4132 and the output bevelled gear 433.

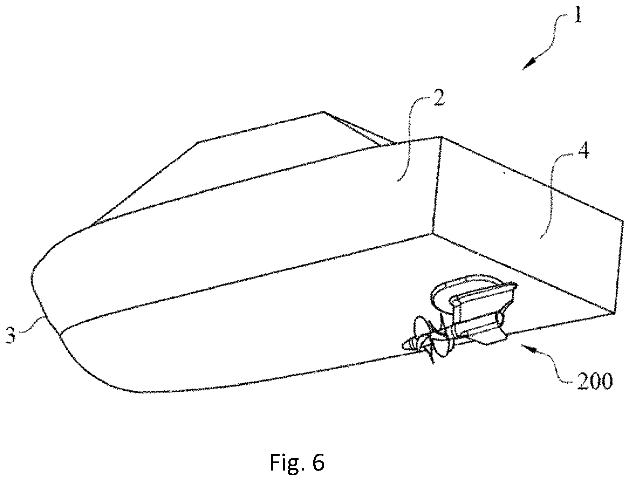

With reference to fig. 6 - fig. 10, a different application of the invention will be described.

Fig. 6 shows a marine vessel 1 in the form of a power boat. It should be noted that the invention is equally applicable to other types of marine vessels, such as ships or sailing yachts. The marine vessel 1 comprises a hull 2 having a bow 3 and a stern 4. The marine vessel 1 further comprises a propulsion system with a propulsion unit 200 according to an embodiment of the invention. In this example, the propulsion unit is a pod drive.

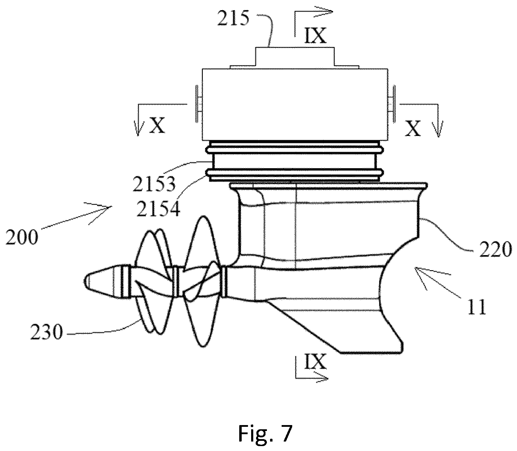

Reference is made also to fig. 7. The propulsion unit 200 comprises a stationary part 215 adapted to be mounted to the hull of the marine vessel. The stationary part comprises an intermediate housing 2153. The intermediate housing is adapted to be mounted to the hull, in a cutout of the hull. The cutout is below the waterline of the hull. Sealing rings 2154 are provided to seal between the intermediate housing and the hull. It should be noted that alternatively, a hull cutout for a propulsion assembly according to embodiments of the invention may be located above the waterline, e.g. in the case of a stern drive arrangement.

The propulsion unit also comprises a movable part 220. The movable part is adapted to be immerged in water carrying the marine vessel. The propulsion system comprises four power supply units (not shown) in the form of internal combustion engines, adapted to deliver mechanical power to the propulsion unit 200.

The movable part comprises two power receiving devices. The power receiving devices are thrust generating devices in the form of propellers 230, adapted to transform the received power into a thrust by acting on the water carrying the marine vessel. The propellers are coaxially arranged, and counter-rotating. However, the invention is equally applicable to propulsion units with a single propeller. The propellers are in this embodiment pulling propellers. However, the invention is equally applicable to propulsion units with one or more pushing propellers. It should be also be noted that the invention is equally applicable to other types of propulsion units, such as stern drives, or water jet devices.

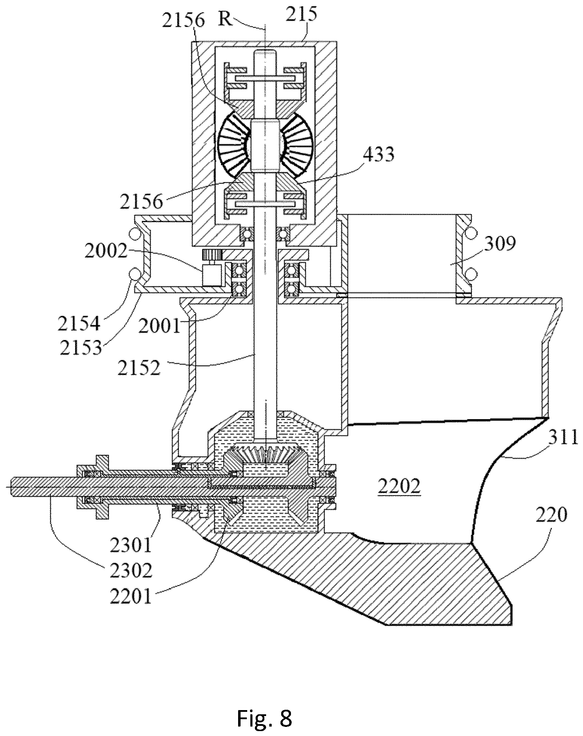

Reference is made also to fig. 8. The movable part 220 is rotatable in relation to the stationary part 215 around a rotation axis R for adjusting the direction of the thrust in relation to the hull. For this, the propulsion unit comprises a rotation bearing arrangement 2001. The movable part is arranged to be rotated by means of one or more rotation actuators, e.g. in the form of one or more electrical motors 2002 and a cog engagement.

The stationary part 215 comprises an output bevelled gear 433 for transferring power an assembly output shaft, herein also referred to as a driveshaft 2152 of the propulsion unit, as described below. The output bevelled gear 433 may be arranged to reverse the rotational direction of the driveshaft 2152. The output bevelled gear 433 may be provided as described in WO2020083494A1, incorporated herein by reference. Such a transmission has two output gears 2156 and two clutches for reversing the driveshaft rotational direction. However, it should be noted that the input transmission may be provided in any suitable way.

In use, the driveshaft 2152 may be substantially perpendicular to a local extension of the hull where the propulsion unit is installed. The driveshaft 2152 extends from the stationary part 215 to into the movable part 220. The driveshaft 2152 is coaxial with the rotation axis R. The movable part 220 comprises an output transmission 2201 arranged to transfer power from the driveshaft 2152 to two final driveshafts 2301, 2302, each arranged to transfer respective portions of the power to a respective of the thrust generating devices 230. The driveshaft preferably comprises two shaft parts, connected with a spline sleeve (not shown).

The propulsion unit is adapted to receive exhaust gases from the engines 301, 302, and the stationary part 215 comprises a stationary exhaust conduit 309 extending to the movable part 220. The movable part 220 comprises a movable exhaust conduit, and a unit outlet 311 for releasing the exhaust gases into the water.

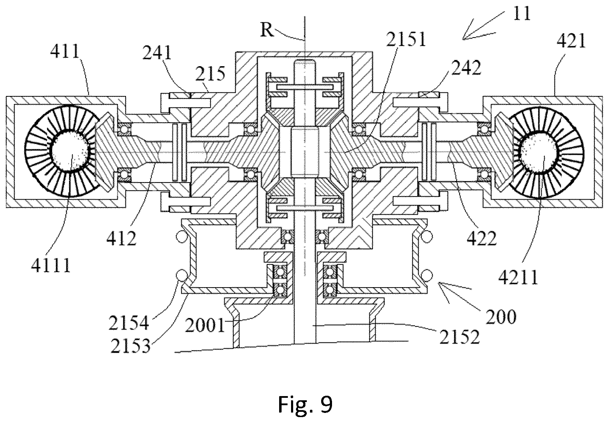

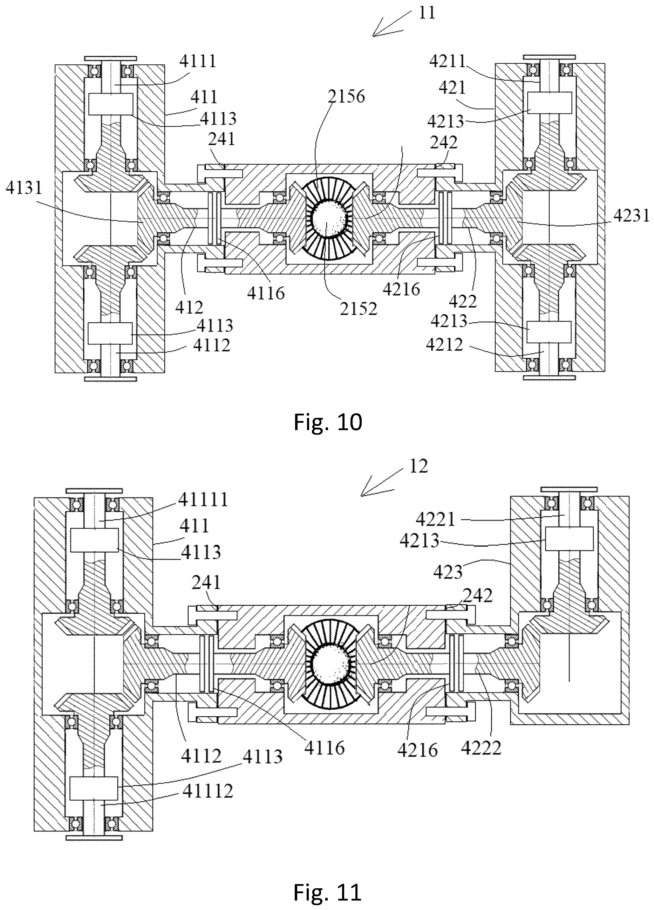

Reference is made also to fig. 9 and fig. 10. Output shafts of two of the power supply units (not shown) are connected to the propulsion unit via a first connection module 411. Output shafts of the two remaining power supply units (not shown) are connected to the propulsion unit 200 via a second connection module 421. The first and second connection modules are mounted on opposite sides of the propulsion unit 200.

The first connection module 411 is mounted to a first module interface 241 of the propulsion unit 200. Thereby, a housing of the first connection module 411 is bolted to a housing of the propulsion unit. The first connection module 411 comprises a first output driving shaft 412. The first output driving shaft 412 is connected to an input shaft of the output bevelled gear 433, e.g. by means of a bolted flange connection, or a spline connection. Thereby, the first output driving shaft 412 of the first connection module extends in an angle to the driveshaft 2152 of substantially 90 degrees.

The first connection module 411 comprises first and second input shafts 4111, 4112 connected to respective output shafts of two of the power supply units. The first output driving shaft 412 is connected to the first and second input shafts 4111, 4112 via a bevelled gear. Thereby, the first and second input shafts 4111, 4112 extend in an angle to the first output driving shaft 412 of substantially 90 degrees. The first and second input shafts 4111, 4112 are coaxial to each other. Thus, the power supply units connected to the input shafts are located on opposite sides of the first connection module 411.

The second connection module 421 is mounted to a second module interface 242 of the propulsion unit 200. Thereby, a housing of the second connection module 421 is bolted to a housing of the propulsion unit. The second connection module 421 comprises a second output driving shaft 422. The second output driving shaft 422 is connected to an input shaft of the output bevelled gear 433, e.g. by means of a bolted flange connection, or a spline connection. Thereby, the second output driving shaft 422 of the second connection module extends in an angle to the driveshaft 2152 of substantially 90 degrees. In this embodiment, the first and second output driving shafts 412, 422 are coaxial.

The second connection module 421 comprises third and fourth input shafts 4211, 4212 connected to respective output shafts of the two remaining power supply units (not shown). The second output driving shaft 422 is connected to the third and fourth input shafts 4211, 4212 via a bevelled gear. Thereby, the third and fourth input shafts 4211, 4212 extend in an angle to the second output driving shaft 422 of substantially 90 degrees. The third and fourth input shafts 4211, 4212 are coaxial to each other. Thus, the power supply units connected to the input shafts are located on opposite sides of the second connection module 421.

In some embodiments, a connection module may have a single shaft, which forms the input shaft as well as the output shaft of the connection module.

The propulsion unit 200, the first connection module 411, and the second connection module 421 form a first propulsion assembly 11. With the first propulsion assembly 11, four power supply units can be arranged to deliver power to the propulsion unit 200. Thereby, two of the power supply units may be, in relation to a direction of straight forward travel of the marine vessel, located forward of the propulsion unit 200, and the other two power supply units may be located behind the propulsion unit 200.

In this embodiment, the first input shaft 4111 is divided into two parts, connected with a freewheel 4113. Similarly, the second input shaft 4112 is divided into two parts, connected with a freewheel 4113. Similarly, the third input shaft 4211 is divided into two parts, connected with a freewheel 4213. Similarly, the fourth input shaft 4212 is divided into two parts, connected with a freewheel 4213.

In this embodiment, the first output driving shaft 412 is divided into two parts, connected with a coupling 4116, in this example a flange coupling. Similarly, the second output driving shaft 422 is divided into two parts, connected with a coupling 4216, in this example a flange coupling.

Reference is made also to fig. 11. As detailed below, the second connection module 421 may be exchanged for a third connection module. Thereby, the propulsion unit 200, the first connection module 411, and the third connection module 423 form a second propulsion assembly 12.

The third connection module 423 is mounted to the second module interface 242 of the propulsion unit 200. The third connection module 423 is similar to the second connection module, except for the following difference: The third connection module 423 has only one input shaft 4221. Thereby, the number of input shafts 4211 of the third connection module differs from the number of input shafts 4221 of the third connection module. With the second propulsion assembly 12, two of the power supply units may be, in relation to a direction of straight forward travel of the marine vessel, located forward of the propulsion unit 200, and the remaining power supply unit may be located behind the propulsion unit 200, or vice versa.

Thereby, first and second propulsion assemblies 11, 12 as shown in fig. 10 - fig. 11 provide for connecting different numbers of power supply units to the propulsion unit, in dependence on different space availabilities, and/or power requirements, in the marine vessels in which they are installed.

Thus, embodiments of the invention provide a large degree of flexibility for installations of propulsion systems in marine vessels. In particular, by means of the connection modules, a single design of a propulsion unit can be used with a variety of configurations of one or more power supply units.

In this embodiment, the first input shaft 4111 is divided into two parts, connected with a freewheel 4113. Similarly, the second input shaft 4112 is divided into two parts, connected with a freewheel 4113. Similarly, the third input shaft 4211 is divided into two parts, connected with a freewheel 4213.

The bevelled gears connecting the input shafts to the output driving shafts, and the output driving shafts to the assembly output shaft, are in the examples above straight bevel gears. However, in some embodiments, the bevelled gears connecting the input shafts to the output driving shafts, and/or the bevelled gears connecting the output driving shafts to the assembly output shaft, may be spiral bevel gears.

In further embodiments, the bevelled gears connecting the input shafts to the output driving shafts, and/or the bevelled gears connecting the output driving shafts to the assembly output shaft, may be hypoid bevel gears. Thereby, the first and second output driving shafts 412, 422 may not be coaxial. Also, the first and second input shafts 4111, 4112 may not be coaxial.

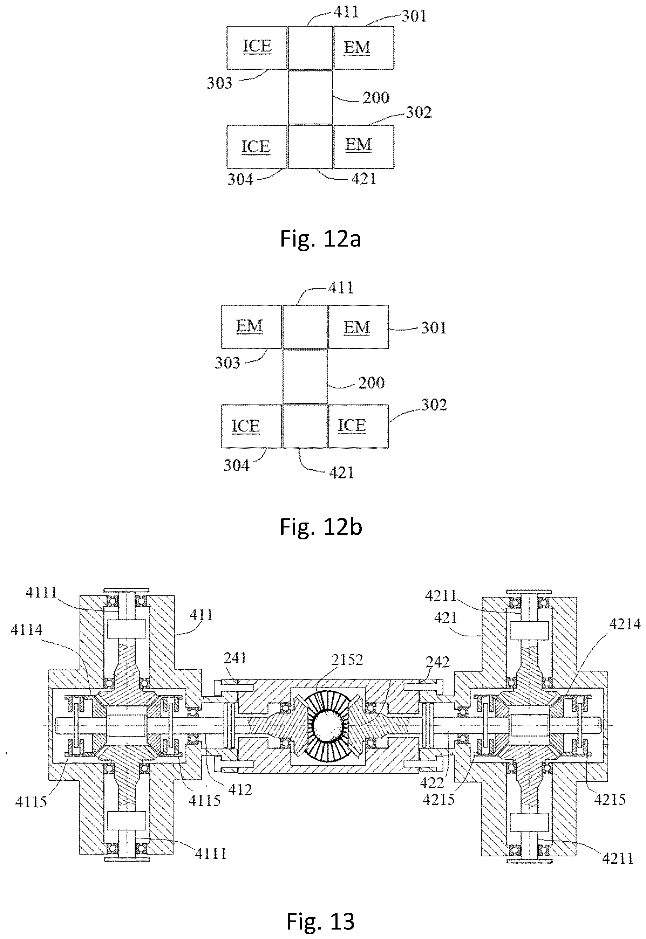

Reference is made to fig. 12a - fig. 12b, depicting examples of configurations of propulsion systems allowed with embodiments of the invention.

In fig. 12a, a first power supply unit 301, in the form of an electric motor, is drivingly connected to a propulsion unit 200 via a first connection module 411. A second power supply unit 303, in the form of an internal combustion engine, is drivingly connected to the propulsion unit 200 via the first connection module 411. The first and second power supply units 301, 303 are located on opposite sides of the first connection module 411.

A third power supply unit 302, in the form of an electric motor, is drivingly connected to the propulsion unit 200 via a second connection module 421. A fourth power supply unit 304, in the form of an internal combustion engine, is drivingly connected to the propulsion unit 200 via the second connection module 421. The third and fourth power supply units 302, 304 are located on opposite sides of the second connection module 421.

The configuration in fig. 12b is similar to the configuration in fig. 12a, except for the following difference: A second power supply unit 303, in the form of an electric motor, is drivingly connected to the propulsion unit 200 via the first connection module 411. A third power supply unit 302, in the form of an internal combustion engine, is drivingly connected to the propulsion unit 200 via the second connection module 421.

Various variations of embodiments of the invention are possible. For example, as depicted in fig. 13, the first and second connection modules 411, 421 may comprise respective reversing gears 4114, 4214 for reversing the rotational direction of the output driving shafts 412, 422 in relation to the rotational directions of the input shafts 4111, 4112, 4211, 4212. Thereby, the rotational direction of the driveshaft 2152 in relation to the rotational directions of the output shafts of the power supply units, connected to the input shafts 4111, 4112, 4211, 4212, can be reversed. The connection module reversing gears 4114, 4214 may comprise two output gears and two clutches 4115, 4215.

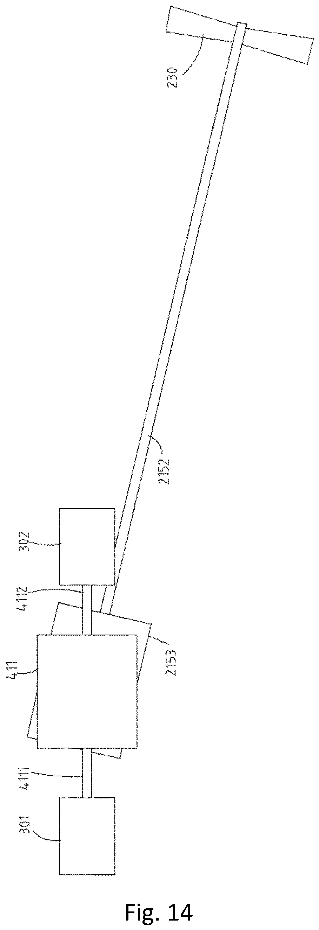

Fig. 14 shows a propulsion assembly for a marine vessel according to an alternative embodiment of the invention. In this embodiment, the propulsion assembly comprises an inboard shaft drive. The propulsion assembly comprises assembly output shaft 2152 in the form of a propeller shaft. The assembly output shaft 2152 is adapted to drive a power receiving device in the form of a propeller 230. The propulsion assembly further comprises a first and second output driving shafts (not shown) adapted to drive the assembly output shaft 2152, via a bevelled gear (not shown). The bevelled gear is housed in a main gear housing 2153. Each of the first and second output driving shafts extend perpendicularly to the assembly output shaft 2152, and on opposite sides of the assembly output shaft 2152.

The propulsion assembly further comprises first and second input shafts 4111, 4112, each adapted to be driven by a respective of a first power supply unit 301 and a second power supply unit 302.

The first and second input shafts 4111, 4112 are adapted to drive the first output driving shaft by means of a bevelled gear (not shown). The first and second input shafts 4111, 4112 extend perpendicularly to the first output driving shaft, and on opposite sides thereof. The bevelled gear, the first and second input shafts 4111, 4112, and first output driving shaft, are included in a first connection module 411.

On the other side of the main gear housing 2153, therefore not visible in fig. 14, the propulsion assembly further comprises third and fourth input shafts, each adapted to be driven by a respective of a third and fourth power supply unit. The third and fourth input shafts are adapted to drive the second output driving shaft by means of a bevelled gear. The third and fourth input shafts extend perpendicularly to the second output driving shaft, and on opposite sides thereof. The bevelled gear, the third and fourth input shafts, and second output driving shaft, are included in a second connection module.

As can be seen in fig. 14, the assembly output shaft 2152 extends in an angle to the first and second input shafts 4111, 4112 of less than 45 degrees.

It should be noted that a propulsion assembly according to any of the claims, including the input shafts, the output driving shafts, and the assembly output shaft, may be provided in a propulsion device, also including the power supply units, and the one or more power receiving devices, e.g. in the form of one or more propellers. Such a propulsion device may be arranged to be mounted outside of a hull of a marine vessel, similarly to an outboard engine.

It is to be understood that the present invention is not limited to the embodiments described above and illustrated in the drawings; rather, the skilled person will recognize that many changes and modifications may be made within the scope of the appended claims.

## Claims

1. A propulsion assembly for a marine vessel, a vehicle, or a working machine, comprising,
- an assembly output shaft (2152) adapted to drive one or more power receiving devices,
- wherein the propulsion assembly further comprises a first output driving shaft (412) which is adapted to drive the assembly output shaft (2152),
- wherein the propulsion assembly comprises a second output driving shaft (422) which is adapted to drive the assembly output shaft (2152),
- **characterized in that** the first output driving shaft extends in an angle to the assembly output shaft which is larger than zero degrees and smaller than 180 degrees,
- wherein the propulsion assembly further comprises a first input shaft (4111) adapted to drive the first output driving shaft and adapted to be driven by a first power supply unit (301), wherein the first input shaft (4111) extends in an angle to the first output driving shaft (412) which is larger than zero degrees and smaller than 180 degrees,
- wherein the propulsion assembly further comprises a second input shaft (4112) adapted to drive the first output driving shaft (412) and adapted to be driven by a second power supply unit (302), wherein the second input shaft (4112) extends in an angle to the first output driving shaft (412) which is larger than zero degrees and smaller than 180 degrees,
- wherein the second output driving shaft (422) is adapted to be driven by a third power supply unit (303), wherein the second output driving shaft extends in an angle to the assembly output shaft which is larger than zero degrees and smaller than 180 degrees.

2. A propulsion assembly according to claim 1, **characterized in that** the first input shaft (4111) extends orthogonally to the first output driving shaft (412).

3. A propulsion assembly according to any one of the preceding claims, **characterized in that** the second input shaft (4112) extends orthogonally to the first output driving shaft (412).

4. A propulsion assembly according to any one of the preceding claims, **characterized in that** a first bevelled gear wheel (4131) is coaxial with the first output driving shaft (412) and is arranged to drive the first output driving shaft (412), wherein the first input shaft (4111) and the second input shaft (4112) are both arranged to drive the first output driving shaft (412) via the first bevelled gear wheel.

5. A propulsion assembly according to any one of the preceding claims, **characterized in that** the first input shaft (4111) and the second input shaft (4112) are located on opposite sides of the first output driving shaft (412).

6. A propulsion assembly according to any one of the preceding claims, **characterized in that** the first output driving shaft (412) extends orthogonally to the assembly output shaft (2152).

7. A propulsion assembly according to any one of the preceding claims, **characterized in that** the second output driving shaft (422) extends orthogonally to the assembly output shaft (2152).

8. A propulsion assembly according to any one of the preceding claims, **characterized in that** an output bevelled gear wheel (2156) is coaxial with the assembly output shaft (2152) and is arranged to drive the assembly output shaft (2152), wherein the first output driving shaft (412) and the second output driving shaft (422) are both arranged to drive the assembly output shaft (2152) via the output bevelled gear wheel (2156).

9. A propulsion assembly according to any one of the preceding claims, **characterized in that** the first output driving shaft (412) and the second output driving shaft (422) are located on opposite sides of the assembly output shaft (2152).

10. A propulsion assembly according to any one of the preceding claims, **characterized in that** the propulsion assembly further comprises a third input shaft (4211) adapted to drive the second output driving shaft (422), and adapted to be driven by the third power supply unit (303), wherein the third input shaft (4211) extends in an angle to the second output driving shaft (422) which is larger than zero degrees and smaller than 180 degrees.

11. A propulsion assembly according to claim 10, **characterized in that** the propulsion assembly further comprises a fourth input shaft (4212) adapted to drive the second output driving shaft (422), and adapted to be driven by a fourth power supply unit (304), wherein the fourth input shaft (4212) extends in an angle to the second output driving shaft (422) which is larger than zero degrees and smaller than 180 degrees.

12. A propulsion assembly according to claim 11, **characterized in that** the third input shaft (4211) extends orthogonally to the second output driving shaft (422).

13. A propulsion assembly according to any one of claims 11-12, **characterized in that** the fourth input shaft (4212) extends orthogonally to the second output driving shaft (422).

14. A propulsion assembly according to any one of claim 11-13, **characterized in that** a second bevelled gear wheel (4231) is coaxial with the second output driving shaft (422) and is arranged to drive the second output driving shaft (422), wherein the third input shaft (4211) and the fourth input shaft (4212) are both arranged to drive the second output driving shaft (422) via the second bevelled gear wheel.

15. A propulsion assembly according to any one of claim 11-14, **characterized in that** the third input shaft (4211) and the fourth input shaft (4212) are located on opposite sides of the second output driving shaft (422).

16. A propulsion assembly for a marine vessel, a vehicle, or a working machine, comprising,
- an assembly output shaft (2152) adapted to drive one or more power receiving devices,
- wherein the propulsion assembly further comprises a first output driving shaft (412) which is adapted to drive the assembly output shaft (2152), wherein the first output driving shaft extends in an angle to the assembly output shaft which is larger than zero degrees and smaller than 180 degrees,
- wherein the propulsion assembly further comprises a first input shaft (4111) adapted to drive the first output driving shaft and adapted to be driven by a primary power supply unit (301), wherein the first input shaft (4111) extends in an angle to the first output driving shaft (412) which is larger than zero degrees and smaller than 180 degrees,
- wherein the propulsion assembly comprises a second output driving shaft (422) which is adapted to drive the assembly output shaft (2152), wherein the second output driving shaft (422) is adapted to be driven by a secondary power supply unit (303), wherein the second output driving shaft extends in an angle to the assembly output shaft which is larger than zero degrees and smaller than 180 degrees,
- wherein an output bevelled gear wheel (2156) is coaxial with the assembly output shaft (2152) and is arranged to drive the assembly output shaft (2152), wherein the first output driving shaft (412) and the second output driving shaft (422) are both arranged to drive the assembly output shaft (2152) via the output bevelled gear wheel (2156).
